(19) Europäisches Patentamt
European Patent Office
Office européen des brevets

(11) **EP 1 923 346 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **07120652.8**

(22) Anmeldetag: **14.11.2007**

(51) Int Cl.:
*B66B 5/18* *(2006.01)*    *F16D 55/24* *(2006.01)*
*F16D 65/14* *(2006.01)*

(54) **Bremseinrichtung, Aufzugsanlage, ein Verfahren zum Erfassen einer Funktion der Bremseinrichtung und ein Modernisierungsset**

Braking device, lift facility, a method for recording the function of the braking device and a modernisation set

Dispositif de freinage, installation d'ascenseur et procédé de détermination d'une fonction du dispositif de freinage et ensemble de modernisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.11.2006 EP 06124193**

(43) Veröffentlichungstag der Anmeldung:
**21.05.2008 Patentblatt 2008/21**

(73) Patentinhaber: **Inventio AG**
**6052 Hergiswil (CH)**

(72) Erfinder: **Fischer, Daniel**
**1723 Villarsel-sur-Marly (CH)**

(56) Entgegenhaltungen:
**EP-A- 1 655 506     DE-C1- 19 737 485**
**GB-A- 1 377 917     GB-A- 1 488 374**
**GB-A- 2 241 488     US-A1- 2007 007 083**

**Beschreibung**

Die vorliegende Erfindung betrifft eine Bremseinrichtung zum Halten eines Fahrkörpers im Stillstand und zum Verzögern des Fahrkörpers im Bedarfsfall, nach dem Oberbegriff des Anspruchs 1, eine Aufzuganlage mit einer solchen Bremseinrichtung, ein Verfahren zum Erfassen einer Funktion der Bremseinrichtung und ein Modernisierungsset mit einer solchen Bremseinrichtung.

Aus der DE 197 37 485 C1 ist eine elektromagnetisch betätigbare Bremseinrichtung mit einem ortsfesten Gehäuse und einer darin drehbaren Arbeitswelle bekannt. Mit der Arbeitswelle sind zwei Bremsscheiben drehfest, jedoch axial verschieblich verbunden. Durch je eine Feder werden axial verschiebliche Ankerscheiben mit einer Normalkraft derart gegen die Bremsscheiben vorgespannt, dass ein erster Reibkontakt zwischen den Bremsscheiben und dem Gehäuse und ein zweiter Reibkontakt zwischen den gegenüber dem Gehäuse drehfesten Ankerscheiben und der Bremsscheibe geschlossen wird. Die in diesen Kontakten wirkenden Reibkräfte wirken einer Drehung zwischen der mit der Arbeitswelle drehfesten Bremsscheibe und dem Gehäuse bzw. den damit drehfest verbundenen Ankerscheiben entgegen und bremsen so die Arbeitswelle. Zum Lösen der Bremse werden die Ankerscheiben gegen die Federn elektromagnetisch gelüftet. Um die beim Schließen der Bremse auftretenden Geräusche zu reduzieren, sind die Ankerscheiben dreiteilig ausgeführt.

Wenn eine solche Bremseinrichtung, beispielsweise aufgrund von Verschleiß in den Bremsscheiben, nur noch eine reduzierte Reibkraft zwischen Anker- und Bremsscheiben aufbringen kann, kann es zu einem Durchrutschen der Ankerscheiben an den an ihnen anliegenden Bremsteilscheiben kommen. Dies gefährdet die Sicherheit.

Aus der EP 1655506 ist eine weitere selbstverstärkende elektromechanische Scheibenbremse bekannt.

Eine Aufgabe der vorliegenden Erfindung ist es daher, eine Bremseinrichtung zur Verfügung zu stellen, die die Sicherheit der Bremseinrichtung erhöht.

Zur Lösung dieser Aufgabe ist eine Bremseinrichtung nach dem Oberbegriff des Anspruchs 1 durch dessen kennzeichnende Merkmale weitergebildet. Anspruch 11 schützt eine entsprechend ausgerüstete Aufzugsanlage, Anspruch 15 stellt das entsprechende Verfahren unter Schutz und mit Anspruch 19 wird ein entsprechendes Modernisierungsset geschützt.

Eine gattungsgemäße Bremseinrichtung umfasst allgemein ein statisches Element und ein bewegliches Element, welches relativ zu dem statischen Element in einem ersten Freiheitsgrad beweglich ist und gegenüber dem statischen Element gebremst werden soll.

Dem Begriff "Bremsen" kann dabei gleichermaßen das Abbremsen des beweglichen gegenüber dem statischen Element, also die Reduzierung von dessen Relativgeschwindigkeit, wie auch das völlige Stillsetzen oder Halten des beweglichen Elementes umfassen. Die Unterscheidung zwischen statischem und beweglichem Element dient vorliegend nur der Unterscheidung zweier relativ zueinander in einem Freiheitsgrad beweglichen Elemente. Insbesondere kann beispielsweise das eine von dem statischen und beweglichen Element inertialfest angeordnet sein, um das andere von dem statischen und beweglichen Element gegenüber der Umgebung zu bremsen. Dieses zu bremsende Element kann ein Antrieb sein, welcher beispielsweise zum Antreiben, Verzögern oder Halten einer Treibscheibe einer Aufzuganlage verwendet ist, und so einen Fahrkörper der Aufzuganlage bremsen. Fahrkörper der Aufzugsanlage sind im Besonderen eine Kabine, welche zur Aufnahme von Transportgut dient, oder ein Gegengewicht, welches in Aufzugsanlagen zum Ausgleich von Kabinenmasse und zur Gewährleistung eine Treibfähigkeit verwendet wird. Das zu bremsende Element kann auch ein Bestandteil des Fahrkörpers bzw. der Kabine oder des Gegengewichts sein. Die Bremseinrichtung kann dabei insbesondere als Feststellbremse zum Halten der Kabine ausgebildet sein.

Dies ist bei heutigen Aufzugsanlagen der Normalfall, da die Aufzugskabine bzw. die mit der Kabine in Verbindung stehenden Antriebsteile wie Antrieb, Gegengewicht und Tragmittel mittels elektromotorischer Kraft geregelt bis zum Stillstand verzögert werden und die Bremseinrichtung demzufolge lediglich die bereits stillstehende Kabine festhalten muss. Selbstverständlich muss jedoch eine derartige Bremseinrichtung neben der Feststellfunktion auch eine Bremsfunktion übernehmen können, wenn beispielsweise in einem Fehlerfalle, wie zum Beispiel einem Stromunterbruch, ein schnelles Stillsetzen der Aufzugskabine erfolgen muss.

Der erste Freiheitsgrad kann beispielsweise ein Drehfreiheitsgrad sein. Hierzu kann das bewegliche Element drehbar in dem statischen Element gelagert sein. In diesem Sinne umfasst der Begriff "Kraft" verallgemeinernd die in dem jeweiligen Freiheitsgrad wirkenden Kräfte bzw. Drehmomente, um die vorliegende Erfindung, die bei auf verschiedene Freiheitsgrade wirkenden Bremseinrichtungen anwendbar ist, gemeinsam darzustellen. Wenn also von einer "Reibkraft" die Rede ist, kann darunter bei Drehfreiheitsgraden gleichermaßen das wirkende Reibdrehmoment mit umfasst sein.

Der erste Freiheitsgrad kann auch ein translatorischer Freiheitsgrad sein. Hierzu kann das bewegliche Element verschieblich in dem statischen Element gelagert sein, wie dies beispielsweise aus der DE 41 06 595 A1 bekannt ist, bei der ein statisches Element in Form einer Mess-Bremse linear längs eines beweglichen Elementes in Form einer Bremsangriffsschiene gleitet.

Aus der EP 1 655 506 sind z.B. Rollen auf Rampenbahnen offenbart.

Zwischen dem statischen Element und dem beweglichen Element kann durch eine steuerbare Normalkraft, die in einem zweiten Freiheitsgrad wirkt, wahlweise ein erster Reibkontakt in einer ersten Kontaktfläche geschlossen werden. In dem ersten Reibkontakt wirkt eine erste Reibkraft einer Bewegung des beweglichen Elementes relativ zu dem statischen Element entgegen. In der DE 197 37 485 C1 werden hierzu beispielsweise die Bremsscheiben in einer ersten Kontaktfläche gegen das Gehäuse gedrückt. Die in diesen Reibkontakten auftretenden ersten Reibkräfte wirken einer Drehung der drehfest mit den Bremsscheiben verbundenen Arbeitswelle entgegen. Wie vorstehend erläutert, umfasst der Begriff "Reibkraft" dabei aufgrund des Drehfreiheitsgrades der Arbeitswelle das auf diese wirkende Reibdrehmoment.

Weiter sind ein oder mehrere Relativelemente derart vorgesehen, dass zwischen dem beweglichen Element und jedem der Relativelemente durch die Normalkraft ein zweiter Reibkontakt in einer zweiten Kontaktfläche geschlossen ist und in dem zweiten Reibkontakt eine zweite Reibkraft einer Bewegung des beweglichen Elements relativ zu dem Relativelement entgegenwirkt. In der DE 197 37 485 C1 drückt beispielsweise eine erste Teilscheibe jeder dreiteiligen Ankerscheibe gegen die zugeordnete Bremsscheibe, wenn die Normalkraft die Bremsscheibe gegen das Gehäuse spannt. Die in diesen Reibkontakten auftretenden zweiten Reibkräfte wirken einer Drehung der drehfest mit den Bremsscheiben verbundenen Arbeitswelle relativ zu den drehfest mit dem Gehäuse verbundenen ersten Teilscheiben entgegen.

Weiterhin ist einem, bevorzugt jedem Relativelement ein aktuierendes Element zugeordnet, welches in dem ersten Freiheitsgrad gegenüber dem statischen Element fest ist, wobei zwischen dem aktuierenden Element und dem Relativelement durch die Normalkraft ein dritter Reibkontakt in einer dritten Kontaktfläche geschlossen ist und in dem dritten Reibkontakt eine dritte Reibkraft einer Bewegung des Relativelements relativ zu dem aktuierenden Element entgegenwirkt. In der DE 197 37 485 C1 drückt beispielsweise eine zweite Teilscheibe der dreiteiligen Ankerscheibe auf die erste Teilscheibe, wenn die Normalkraft die Bremsscheibe gegen das Gehäuse spannt. Die in diesen Reibkontakten auftretenden dritten Reibkräfte wirken einer Drehung der ersten Teilscheiben relativ zu den zweiten Teilscheiben entgegen. Bevorzugt wird die erste, zweite und/oder dritte Kontaktfläche durch dieselbe Normalkraft beaufschlagt.

In einem Reibkontakt stellt sich allgemein stets eine der Summe der übrigen Kräfte entgegengesetzt gleiche Reibkraft FR ein, die maximal den Wert FRmax = $\mu \times$ FN annehmen kann, wobei FN die auf die Kontaktfläche wirkende Normalkraft und $\mu$ einen Reibwert bezeichnet. Liegt dabei Haftreibung (Index H) vor, kann sich also maximal eine Reibkraft $FR^H = \mu^H \times$ FN einstellen. Übersteigt die Summe der übrigen angreifenden Kräfte diesen Wert, so wechselt der Reibkontakt von Haft- zu Gleitreibung (Index G) und es stellt sich der Reibwert $FR^G = \mu^G \times$ FN ein. Der Begriff "Gleitreibung" umfasst dabei auch Rollreibung, wie sie beispielsweise beim Abrollen von Wälzlagern auftritt.

Erfindungsgemäß ist nun ein Relativelement in dem ersten Freiheitsgrad gegenüber dem statischen Element zwischen einer Normallage und einer Bremslage beweglich und elastisch in die Normallage vorgespannt, wobei die zweite und dritte Kontaktfläche so ausgebildet sind, dass eine maximale zweite Reibkraft, insbesondere bei einem Haften im zweiten und dritten Reibkontakt, größer als eine maximale dritte Reibkraft ist. Eine Bewegung des Relativelements in dem ersten Freiheitsgrad über die Bremslage hinaus wird, beispielsweise form- und/oder kraftschlüssig, verhindert. Hierzu können bevorzugt Anschläge die Bewegung des Relativelements zwischen Normallage und Bremslage begrenzen.

Dies bewirkt mechanisch folgendes: Wird das bewegliche Element gehalten, wirkt die Normalkraft FN in dem zweiten Freiheitsgrad, alle drei Reibkontakte sind geschlossen und es herrscht Haftreibung. Da die dritte Reibkraft $FR3^H$, die zwischen dem Relativelement und dem aktuierenden Element wirkt, welches in dem ersten Freiheitsgrad gegenüber dem statischen Element fest ist, stets kleiner als die zweite Reibkraft $FR2max^H$ ist, die maximal zwischen dem Relativelement und dem beweglichen Element wirken kann, begrenzt diese kleinere dritte Reibkraft $FR3^H$ diejenige Reibkraft, die über das aktuierende und das Relativelement zwischen dem statischen und dem beweglichen Element übertragen wird. Zusammen mit der ersten Reibkraft $FR1^H$, die direkt, d.h. ohne Zwischenschaltung des aktuierenden und des Relativelements in der ersten Kontaktfläche übertragen werden kann, ergibt sich damit die gesamte, auf das bewegliche Element wirkende Reibkraft $FR^H$ als Summe dieser beiden Reibkräfte:

$$FR^H = FR1^H + FR3^H \qquad (1)$$

Reicht diese Reibkraft nun im Betrieb nicht mehr zum Halten des beweglichen Elementes aus, was insbesondere aus einem Verschleiß oder einer Verschmutzung resultieren kann, der bzw. die zu einer nachlassenden Normalkraft und/oder einem verringerten Reibwert in den Kontaktflächen führt, kommt es zu einem Durchrutschen des beweglichen Elementes relativ zum statischen Element in dem ersten Freiheitsgrad.

In diesem Fall bewegt sich das bewegliche Element auch unter wirkender Normalkraft FN in dem ersten Freiheitsgrad. Da die Maximale zweite Reibkraft zwischen Relativelement und beweglichem Element erfindungsgemäß größer ist als die maximale dritte Reibkraft zwischen Relativelement und aktuierendem Element, liegt im zweiten Reibkontakt weiterhin Haftreibung vor, während der dritte Reibkontakt ins Gleiten (bzw. Rollen) kommt. Dabei nimmt das bewegliche Element das Relativelement in dem ersten Freiheitsgrad mit, bis es aus seiner Normalin die Bremslage gelangt und dort, beispielsweise formschlüssig durch einen Anschlag oder dergleichen gestoppt wird. Das Relativelement wird demzufolge selbsttätig, d.h. ohne Steuerungseinfluss von aussen, von der Normallage in die Bremslage geschalten und dieser Wechsel findet in beide Verfahrrichtungen, also rückwärts und vorwärts, statt.

Sobald das Relativelement in der Bremslage gestoppt und in dem ersten Freiheitsgrad relativ zum statischen Element festgelegt ist, wird über die zweite Kontaktfläche zwischen Relativ- und beweglichem Element die zweite Reibkraft FR2 von dem statischen auf das bewegliche Element übertragen. Die gesamte, auf das bewegliche Element wirkende Reibkraft FR ergibt sich damit als Summe dieser beiden Reibkräfte:

$$FR = FR1 + FR2 \quad (1')$$
$$> FR1 + FR3 \quad (1'')$$

Reicht bei einer Bremseinrichtung nach der vorliegenden Erfindung also die gesamte Reibkraft FR = FR1 + FR3, die zum Halten des beweglichen Elementes im Normalfall ausgelegt ist, nicht mehr zum Halten des beweglichen Elementes aus, so bewegt sich dieses in dem ersten Freiheitsgrad und verlagert dabei, wie vorstehend beschrieben, das Relativelement in seine Bremslage, wo es relativ zum statischen Element festgelegt wird und die zweite, größere Reibkraft FR2 auf das bewegliche Element überträgt, so dass sich die gesamte, auf dieses wirkende Reibkraft von FR1+FR3 auf FR1+FR2 erhöht. Vorteilhaft kann damit eine Sicherheitsreserve S = (FR1+FR2)/(FR1+FR3) für den Fall zur Verfügung gestellt werden, dass die normale gesamte Reibkraft nicht mehr ausreicht, da beispielsweise die erste und/oder dritte Kontaktfläche Verschleiß aufweist, verölt ist oder die Normalkraft nachlässt. Dieses versetzte Aufbauen der gesamten zum Bremsen erforderlichen Kraft wirkt sich insofern weiter günstig aus, da ein Kraftimpuls auf das gesamte bewegte System reduziert wird, da die Bremskraft über zwei Stufen aufgebaut wird.

Alternativ kann anstelle der dritten Kontaktfläche und des aktuierenden Elementes beispielsweise auch eine Andruckfeder verwendet werden, welche einerseits ein andrücken des Relativelementes in dem zweiten Freiheitsgrad bewirken kann und andererseits eine Relativverschiebung des Relativelementes im ersten Freiheitsgrad zwischen Normal- und Bremslage ermöglicht. Das Relativelement kann bei dieser Ausführung beispielsweise gleichzeitig als Ankerplatte ausgeführt sein. Bei dieser Ausführungsart reduziert sich der Wert der Reibkraft der dritten Kontaktfläche (FR3) praktisch auf Null. Bei den folgenden Ausführungen wird stets die dritte Kontaktfläche verwendet, inhaltlich ist darunter auch verstanden, dass diese dritte Kontaktfläche wie beschrieben entfällt und die zugehörige Reibkraft (FR3) den Wert Null annimmt.

Bei einer Bremseinrichtung kann es schwierig sein, eine Fehlfunktion einfach und zuverlässig zu erfassen. Eine solche Fehlfunktion kann beispielsweise vorliegen, wenn die Bremseinrichtung während des Fahrbetriebs nicht öffnet, oder wenn sie, wie vorstehend beschrieben, nur noch eine reduzierte Bremskraft aufbringt. Hierzu ist es betriebsintern beispielsweise bekannt, die Bremskraft und den Verschleiß in Wartungsintervallen manuell zu prüfen, was zeit- und personalaufwändig sowie fehleranfällig ist.

In einer bevorzugten Ausführung der vorliegenden Erfindung umfasst die Bremseinrichtung daher eine Sensoreinrichtung zur Erfassung der Normal- und/oder Bremslage des Relativelements. Eine solche Sensoreinrichtung kann beispielsweise ein Kontakt sein, der geschlossen wird, wenn das Relativelement in die Bremslage kommt, und/oder geöffnet wird, sobald es die Normallage verlässt. Gleichermaßen können beispielsweise optische Sensoren die Lage des Relativelementes überwachen oder Positionsgeber die Lage des Relativelements erfassen.

Bewegt sich nun, wie vorstehend beschrieben, das bewegliche Element auch unter wirkender Normalkraft FN in dem ersten Freiheitsgrad, nimmt das bewegliche Element das Relativelement in dem ersten Freiheitsgrad mit, bis es aus seiner Normal- in die Bremslage gelangt.

Diese Bewegung des Relativelementes wird durch die Sensoreinrichtung zur Erfassung der Normal- und/oder Bremslage erkannt. Da das Relativelement in die Normallage vorgespannt ist und bei einer zum Halten ausreichenden Gesamtreibkraft $FR^H = FR1^H + FR3^H$, also bei normalem, fehlerfreien Betrieb in dieser verbleibt, kann also aus einer Verlagerung des Relativelements aus der Normal- in die Bremslage zuverlässig auf die Fehlfunktion geschlossen und beispielsweise eine Warnung an eine Aufzugsteuerung ausgegeben werden.

Ein Vorteil der Erfindung ergibt sich durch die Verwendung einer zweckmässigen Überwachungslogik, welche ein korrektes Funktionieren der Bremseinrichtung überwacht. Diese Überwachungslogik umfasst die Sensoreinrichtung zur Erfassung der Normal- und/oder Bremslage des Relativelements, eine Geschwindigkeits und/oder Wegmesseinrichtung und das Steuersignal zur Bremseinrichtung. Fallweise kann die Bremseinrichtung auch mit einem weiteren Sensor zur Feststellung des Zustandes Kontaktspiel aufgehoben, bzw. Bremse geschlossen oder Kontaktspiel vorhanden bzw. Bremse gelüftet versehen sein. Ein "Steuersignal Bremse" signalisiert in folgenden den Anweisungszustand welche eine Steuereinrichtung als Steuersignal ("zu" oder "offen") zur Bremseinrichtung gibt. Die "Geschwindigkeit" entspricht dem Zustand des beweglichen Elementes bzw. des Fahrkörpers oder der Aufzugskabine und gibt an ob sich das bewegliche Element im Stillstand (o) oder in Bewegung ($\neq$0) befindet.

Eine Diagnose des Zustandes kann dabei beispielsweise dem folgenden Schema folgen:

| | Steuersignal Bremse | | Geschwindigkeit | | Lage Relativelement | | Feststellung |
|---|---|---|---|---|---|---|---|
| | zu | offen | 0 | $\neq$0 | Normal | Brems | |
| F1 | X | | X | | X | | in Ordnung |
| F2 | X | | X | | | X | Bremsfehler / Überlast |
| F3 | X | | | X | | X | in Ordnung |
| F4 | | X | X | | X | | in Ordnung |
| F5 | | X | X | | | X | Lüftfehler |

Dieses Diagnoseschema erlaubt eine nahezu dauernde Überwachung der Funktion der Bremseinrichtung, im Besonderen da bei jedem Halten (F1, F2) der Sollzustand erfasst werden kann und bei Abweichen entsprechende Massnahmen getroffen werden können. Eine Gefahr besteht nicht, da mit Erreichen der Bremslage eine erhöhte Bremskraft, in der Regel eine um Annähernd den Faktor 2 erhöhte Bremskraft zur Verfügung steht. Damit ist ein sicheres Halten gewährleistet.

Gleichermassen kann bei Feststellung eines Lüftfehlers (F5) die Anlage angehalten und die Funktion verifiziert werden. Aufgrund einer Fehlerhistorie, welche in der Überwachungslogik gespeichert ist, kann ein Service zielgerichtet durchgeführt werden.

Ein Freilaufweg des Relativelementes kann dabei gering gehalten werden. Er kann lediglich so gross gewählt werden, dass eine zuverlässige Feststellung der Position des Relativelementes durch die Sensoreinrichtung einfach ermöglicht ist und andererseits durch die entstehende Verschiebung des beweglichen Elementes bzw. des Fahrkörpers keine gefährliche Halteabweichung, wie beispielsweise eine Stufenbildung bei einer Aufzugskabine, entsteht. Typischerweise beträgt der gewählte Freilaufweg in etwa 3 bis 10 mm in jeweils beide Bewegungsrichtungen entsprechend dem ersten Freiheitsgrad.

Das Relativelement wird mittels einer Vorspannung in seiner Normallage gehalten bzw. nach einer erfolgten Relativverschiebung wieder in die Normallage zurückgeführt. Diese Vorspannung kann beispielsweise mittels einer elastischen Feder, etwa einem einfachen Federstab, einer mechanischen Dreh- oder Schraubenfeder oder auch einer hydraulischen Feder erzeugt werden. Auch eine Vorspannung mittels magnetischer Kraft ist möglich, indem Magnetpole entsprechend angeordnet werden. Besonders bei Verwendung einer Andruckfeder anstelle des aktuierenden Elementes wie vorgängig erläutert kann die Vorspanneinrichtung mit einer magnetischen Lüfteinheit kombiniert werden.

Vorstehend wurde die vom Relativelement bei der Bewegung aus der Normal- in die Bremslage zu überwindende Vorspannung, die das Relativelement in die Normallage vorspannt bzw. zurückzustellen sucht, vernachlässigt. Vorteilhafterweise sind die zweite und dritte Kontaktfläche jedoch so ausbildet, dass die maximale zweite Reibkraft, insbesondere bei einem Haften im zweiten und dritten Reibkontakt, auch größer als die Summe aus der maximalen dritten Reibkraft und der das Relativelement in seine Normallage vorspannenden Kraft KV ist:

$$FR2max^H > FR3max^H + KV \qquad (2)$$

was bei vernachlässigbar kleiner Kraft KV für

$$FR2max^H > FR3max^H \qquad (2')$$

erfüllt ist, insbesondere, wenn die zweite Reibkraft erheblich größer als die dritte Reibkraft ist:

$$FR2max^H \gg FR3max^H \qquad (2'').$$

Da darüber hinaus in Bremseinrichtungen, insbesondere für Aufzuganlagen, regelmäßig relativ große Reibkräfte $FR2^H$, $FR3^H$ auftreten, gilt mit Gleichung (2') bzw. (2") in guter Näherung auch Gleichung (2).

Vorstehend wurde der Fall des Haltens des beweglichen Elements erläutert, in dem in dem ersten, zweiten und dritten Reibkontakt jeweils Haftreibung herrscht. Ist die Bremseinrichtung als Feststellbremse zum Halten vorgesehen, tritt nur dieser Fall auf.

Wird die Bremseinrichtung jedoch zusätzlich zum Abbremsen des beweglichen Elementes eingesetzt, so bewegt sich das bewegliche Element während des Abbremsens auch unter der Normalkraft in dem ersten Freiheitsgrad weiter und sucht aufgrund des vorstehend beschriebenen Prinzips dabei das Relativelement mitzunehmen und aus seiner Normal- in seine Bremslage zu ziehen. In diesem Fall liegt im ersten und wenigstens im zweiten oder dritten Reibkontakt Gleitreibung vor.

Für diesen Fall kann die Kraft KV, die das Relativelement in die Normallage vorspannt, so ausgelegt sein, dass sie bei einem normalen Abbremsvorgang zusammen mit der dritten Reibkraft die zweite Reibkraft ausreichend kompensiert und so das Relativelement in seiner Normallage hält. Die Vorspannung kann allgemein beispielsweise mittels einer elastischen Feder, etwa einer mechanischen Dreh- oder Schraubenfeder oder einer hydraulischen Feder erzeugt werden. Wird das bewegliche Element schließlich bis zum Stillstand abgebremst und anschließend gehalten, so wechseln im ersten, zweiten bzw. dritten Reibkontakt die Kontaktzustände von Gleit- zu Haftreibung. Die dabei auftretenden Haftreibkräfte sind im Allgemeinen deutlich größer als die während des Abbremsens herrschenden Reibkräfte bei Gleitreibung (bzw. Rollreibung).

Wenn dann die gesamte Haftreibkraft $FR^H = FR1^H + FR3^H$ nicht mehr zum Halten des beweglichen Elements ausreicht, wird das Relativelement, wie vorstehend beschrieben, schließlich in seine Bremslage verlagert und dort festgelegt, was in der bevorzugten Ausführung von der Sensoreinrichtung erfasst wird. Da die Gleitreibung im allgemeinen deutlich geringer als die Haftreibung ist, kann so das Relativelement während eines Abbremsens, bei dem Gleitreibung in wenigstens einigen der Kontaktflächen auftritt, durch eine geringe Vorspannung in seiner Normallage gehalten werden, während bei einem Halten, bei dem Haftreibung und damit eine höhere zweite und dritte Reibkraft vorliegt, der oben beschriebene Mechanismus zur Sicherung einer ausreichenden Gesamtreibkraft bzw. zur Erfassung einer fehlerhaft niedrigen Gesamthaftreibkraft $FR^H = FR1^H + FR3^H$ in Kraft tritt.

In einer bevorzugten Ausführung sind die zweite und dritte Kontaktfläche daher derart ausgebildet, dass die zweite Reibkraft $FR2^G$, die beim Gleiten im zweiten Reibkontakt auftritt, geringer ist als die Summe aus der Kraft KV, die das Relativelement in seine Normallage vorspannt, und der dritten Reibkraft $FR3^G$ und/oder $FR3^H$, die sich beim Gleiten bzw. Haften im dritten Reibkontakt einstellt. Hierdurch wird das Relativelement während eines Abbremsens in seiner Normallage gehalten. Gleichzeitig sind in dieser bevorzugten Ausführung die zweite und dritte Kontaktfläche derart ausgebildet, dass die maximale zweite Reibkraft $FR2max^H$, die sich beim Haften im zweiten Reibkontakt maximal einstellen kann, größer ist als die Summe aus der Kraft KV, die das Relativelement in seine Normallage vorspannt, und der dritten Reibkraft $FR3max^H$, die beim Haften im dritten Reibkontakt auftreten kann. Dies ist, wie vorstehend erläutert, einfach zu realisieren, da die Haftreibkräfte im Allgemeinen deutlich größer als die Gleitreibkräfte sind. In der bevorzugten Ausführung gilt also:

$$FR2^G < KV + FR3^G \qquad (3)$$

$$FR2max^H > KV + FR3max^H \qquad (2)$$

In der Regel reicht jedoch die Erfüllung der Bedingung (2) aus folgendem Grund bereits aus: Beginnt die Bremseinrichtung den Abbremsvorgang, werden der erste, zweite und dritte Reibkontakt geschlossen. Dabei liegt zwischen dem beweglichen Element, welches sich anfangs relativ zum statischen Element bewegt, und dem Relativelement, welches in seine relativ zum statischen Element ruhende Normallage vorgespannt ist, sofort Gleitreibung im zweiten Reibkontakt vor. Im dritten Reibkontakt zwischen dem Relativelement und dem aktuierenden Element liegt zunächst, solange das Relativelement nicht beschleunigt wird, Haftreibung vor. Nun ist, wie vorstehend ausgeführt, im Allgemeinen die Gleitreibung deutlich niedriger als die maximale Haftreibung. Damit ist die im zweiten Reibkontakt wirkende zweite Reibkraft $FR2^G$ im Allgemeinen niedriger als dritte Reibkraft $FR3max^H$, die sich maximal im dritten Reibkontakt einstellen kann. Es wird also im Regelfall (sofern sich Relativelement und aktuierendes Element nicht relativ zueinander bewegen), die zweite Reibkraft im zweiten Reibkontakt, in dem Gleitreibung herrscht, während des Abbremsens dauernd kleiner sein als die dritte Reibkraft im dritten Reibkontakt, in dem Haftreibung herrscht. Damit wird das Relativelement in seiner Normallage gehalten, bis das bewegliche Element völlig zum Stillstand gelangt ist. Bei Beginn des Abbremsens gilt also

$$FR2^G < FR3max^H + KV \ (3'),$$

so dass das Relativelement sich gegenüber dem aktuierenden Element nicht bewegt, sondern in seiner Normallage verbleibt, während im zweiten Reibkontakt Gleitreibung vorliegt.

Sobald das bewegliche Element stillsteht, wechselt auch der zweite Reibkontakt von Gleit- zu Haftreibung und es gilt

$$FR2max^H > KV + FR3max^H \qquad (2)$$

Übersteigen nun die übrigen am beweglichen Element angreifenden Kräfte die von der Bremseinrichtung maximal zur Verfügung gestellten Reibkräfte

$$FRmax^H = FR1max^H + FR3max^H \qquad (1''')$$

wird das Relativelement aus seiner Normallage in die Bremslage verlagert und dort festgelegt, wobei vorteilhafterweise eine Fehlfunktion erkannt werden kann. Wie erläutert, reicht also die Erfüllung der Bedingung (2) bzw. unter Vernachlässigung der Kraft KV der Bedingung (2') aus, um die Sicherheit der Bremseinrichtung zu erhöhen und eine Fehlfunktion bei einer nur haltenden Bremseinrichtung zu erfassen. Wird mit der Bremseinrichtung das bewegliche Element auch abgebremst, reicht darüber hinaus die Erfüllung der Bedingung (3) oder (3') aus, um sicherzustellen, dass das Relativelement beim normalen Abbremsvorgang in seiner Normallage verbleibt , so dass anschließend die vorstehend beschriebene Sicherheitsreserve zur Verfügung steht und vorteilhafterweise eine Fehlfunktion beim Halten festgestellt werden kann.

Bedingung (3') ist in der Regel gleichzeitig mit Bedingung (2) bzw. (2') erfüllt, da die Gleitreibung (bzw. Rollreibung) meist deutlich niedriger ist als die Haftreibung. Erfindungsgemäß ist also allgemein nur erforderlich, das die maximale Reibkraft FR2max, die im zweiten Reibkontakt vorliegt und in der Regel durch die maximale Haftreibkraft FR2max$^H$ definiert ist, größer als die maximale Reibkraft FR3max ist, die im dritten Reibkontakt vorliegt und in der Regel durch die maximale Haftreibkraft FR3max$^H$ bestimmt wird (Bedingung (2')). Damit ist im Allgemeinen auch Bedingung (3') erfüllt, so dass auch bei einem Abbremsen das Relativelement in seiner Normallage gehalten wird, bis der Haltezustand erreicht ist.

Vorteilhafterweise wird jedoch auf diese Feinabstimmung der Vorspannung verzichtet, wenn die Bremseinrichtung primär als Halte- bzw. Feststellbremse verwendet wird und nur im Bedarfsfalle zum dynamischen Abbremsen des Fahrkörpers verwendet wird. Ein Bedarfsfall ist beispielsweise ein Ansprechen eines Geschwindigkeitsüberwachungskreises oder ein Stromausfall, usw. In einem solchen Bedarfsfalle ist es dann durchaus gewünscht, dass das Relativelement unverzüglich bis zur Bremslage (B) mitgenommen wird und dann zwangsläufig eine höhere Bremskraft erzeugt. Die Anforderung an die Vorspannung sind dann entsprechend gering, sie ist lediglich ausgelegt um das unbelastete Relativelement (3) wiederum in die Normallage zu bewegen und dort mit geringer Kraft lose zu halten.

Die maximale zweite Reibkraft kann beispielsweise dadurch größer als die maximale dritte Reibkraft vorgegeben werden, dass die zweite Kontaktfläche einen höheren Reibwert aufweist als die dritte Kontaktfläche. Damit lassen sich die Bedingungen (2) bzw. (2') und (3) bzw. (3') erfüllen. Werden Relativ- und aktuierendes Element mit derselben Normalkraft FN beaufschlagt, so ergibt sich damit eine maximale zweite Reibkraft FR2 = $\mu$2 $\times$ FN, die größer ist als die maximale dritte Reibkraft FR3 = $\mu$3 $\times$ FN. Hierzu können die zweite und dritte Kontaktfläche beispielsweise aus unterschiedlichem Material bestehen. Zu diesem Zweck kann das Relativelement auf der zweiten Kontaktfläche eine Beschichtung zur Erhöhung des Reibwertes $\mu$2 aufweisen und/oder das aktuierende Element kann auf der dritten Kontaktfläche eine Beschichtung zur Reduktion des Reibwertes $\mu$3 aufweisen. In der dritten Kontaktfläche können auch Wälzlager, insbesondere Nadellager zur Darstellung bestimmter Reibwerte angeordnet sein.

In einer bevorzugten Ausführung sind die Reibwerte der ersten und zweiten Kontaktfläche im Wesentlichen gleich, so dass sich im ersten und zweiten Reibkontakt im Wesentlichen gleiche Reibkräfte einstellen, was die Belastungen vorteilhaft gleichmäßiger verteilen kann. Der Begriff "Reibwert" kann vorliegend sowohl den Haft- als auch den Gleit- bzw. Rollreibwert eines Reibkontaktes umfassen, wobei in der praktischen Anwendung der erste und der zweite Reibkontakt in bewährter Art und Weise als Reibbremsbelag ausgeführt ist.

Die maximale zweite Reibkraft kann alternativ oder zusätzlich dadurch größer als die maximale dritte Reibkraft vorgegeben werden, dass die dritte Kontaktfläche relativ zur Normalkraft geneigt ist. Damit wirkt auf die schräge dritte Kontaktfläche eine entsprechend geringere Normalkraft und somit eine entsprechend geringere dritte Reibkraft. Vorteilhafterweise spaltet sich die Normalkraft, die im ersten, zweiten und dritten Reibkontakt wirkt, bei einer geneigten dritten Kontaktfläche in eine Komponente normal zur dritten Kontaktfläche, die die dritte Reibkraft induziert, und eine Komponente tangential zur dritten Kontaktfläche auf, die sich bei Bewegung in eine Richtung im ersten Freiheitsgrad zu der dritten Reibkraft zu einer dritten Gesamtreibkraft addiert, bei der entgegengesetzten Bewegung von dieser subtrahiert. Somit könnte vorteilhaft bei entgegengesetzten Bewegungen in dem ersten Freiheitsgrad unterschiedliche dritte Gesamtreibkräfte dargestellt werden. Vorteilhafterweise ergibt sich bei der Verwendung der geneigten dritten Kontaktfläche bei einer Relativbewegung zwischen Relativ- und aktuierendem Element eine Veränderung der Normalkraft, da beispielsweise Federn, welche zur Erzeugung dieser Normalkraft verwendet werden, ge- oder entspannt werden. Dies wird beispielsweise beim Einsatz in Aufzuganlagen mit teilbalancierten Gegengewichten vorteilhaft verwendet, da damit abhängig von einer allfälligen Rutschrichtung unterschiedliche Bremswirkungen erzeugt werden können.

Wie vorstehend ausgeführt, werden unter dem Begriff "Kraft" in der vorliegenden Anmeldung in dem jeweiligen Freiheitsgrad wirkenden translatorische Kräfte und Drehmomente verstanden. Unterschiedliche Reibkräfte könne daher auch durch unterschiedliche Hebelarme dargestellt werden. So kann beispielsweise eine größere zweite Reibkraft (in diesem Fall ein Drehmoment) dadurch dargestellt werden, dass der zweite Reibkontakt radial weiter von einer Drehachse des beweglichen Elementes beanstandet ist als der dritte Reibkontakt. Bei gleicher Normalkraft ergeben sich damit unterschiedliche Reibkräfte, in diesem Falle Drehmomente.

Bevorzugt können das Relativelement und das aktuierenden Element durch die Normalkraft in dem zweiten Freiheitsgrad so bewegt werden, dass der erste, zweite und dritte Reibkontakt geschlossen wird. Dies ermöglicht eine einfache mechanische Realisierung der Reibkontakte.

Insbesondere kann ein Bremselement vorgesehen sein, welches in dem ersten Freiheitsgrad relativ zu dem beweglichen Element fest ist und durch die Normalkraft in dem zweiten Freiheitsgrad so bewegt wird, dass der erste, zweite und dritte Reibkontakt geschlossen wird. Gleichermaßen kann das bewegliche Element relativ zu dem statischen Element durch die Normalkraft in dem zweiten Freiheitsgrad so bewegt, insbesondere elastisch verformt werden, dass der erste, zweite und dritte Reibkontakt geschlossen wird.

In beispielsweise aus der DE 197 37 485 C1 oder der DE 41 06 595 A1 bekannten Weise kann das aktuierende Element, insbesondere durch ein elastisches Mittel, mit der Normalkraft vorgespannt sein und elektromagnetisch und/oder hydraulisch wahlweise gelüftet werden. Bei einem Ausfall einer an einen Elektromagneten angelegten Spannung, einem Druckabfall in einer Hydraulikleitung oder einem Fehler in der Steuerung der Bremseinrichtung wird das aktuierende Element nicht mehr gelüftet, so dass die Normalkraft die Reibkontakte und damit die Bremseinrichtung schließt. Im Falle eines Defektes schließt die Bremseinrichtung damit selbsttätig und automatisch.

Eine erfindungsgemässe Bremseinrichtung ist somit derart ausgeführt, dass die Bremseinrichtung bei stillstehendem Fahrkörper bzw. stillstehendem beweglichen Element, in eine Normallage geschalten werden kann in welcher Normallage die Bremseinrichtung eine erste Haltekraft erzeugt. Diese Haltekraft ist ausgelegt um das bewegliche Element im Stillstand zu halten. Weiter wechselt die Bremseinrichtung bei einer allfälligen Bewegung des beweglichen Elementes, unabhängig von einer Bewegungsrichtung, selbsttätig von der Normallage in eine Bremslage. In der Bremslage erzeugt die Bremseinrichtung eine im Wesentlichen verdoppelte oder vervielfachte Haltekraft bzw. Bremskraft. Vorteilhafterweise ist dieser selbsttätige Wechsel von der Normallage in die Bremslage mittels einer Sensoreinrichtung überwacht. Der Vorteil dieses Erfindungsteiles ist, dass ein erstes Durchrutschen des beweglichen Elementes mittels Sensoreinrichtung erkannt werden kann und dass sich eine selbsttätige Verstärkung der Haltekraft ergibt, wodurch ein weiteres Durchrutschen verhindert ist.

Vorteilhafterweise ist diese Bremseinrichtung zusammen mit einer Antriebsmaschine verwendet welche den Fahrkörper jeweils, beispielsweise elektromotorisch oder hydraulisch, geregelt vom Stillstand weg beschleunigt und wiederum zum Stillstand verzögert, wodurch die Bremseinrichtung im Regelfalle nur zum Halten des Fahrkörpers im Stillstand verwendet wird.

Eine erfindungsgemäße Bremseinrichtung kann eine Mehrzahl von Relativelementen sowie diesen jeweils zugeordnete aktuierende Elementen umfassen, wie dies dem Grundsatz nach beispielsweise aus der DE 197 37 485 C1 bekannt ist. Die vorstehend erläuterten gesamten Reibkräfte ergeben sich dann aus den Summen der ersten und dritten bzw. zweiten Reibkräfte.

Wie vorstehend erläutert, kann eine der möglichen Fehlfunktionen einer Bremseinrichtung darin bestehen, dass eine gesamte Reibkraft, die sich aus der ersten und der dritten Reibkraft zusammensetzt, zu gering ist um das bewegliche Element im Stillstand zu Halten. Diese Fehlfunktion kann erkannt werden, wenn die Sensoreinrichtung erfasst, dass das Relativelement sich nicht in seiner Normallage befindet. Bevorzugt ist dabei eine Bewegung des Relativelementes durch Anschläge begrenzt. Dadurch gelangt bei Erreichen dieser Anschläge die im Vergleich zur dritten Reibkraft höhere zweite Reibkraft zur Anwendung und hält das bewegliche Element. Diese Fehlfunktion kann somit erkannt werden, ohne dass die Funktion des Haltens des beweglichen Elementes im Gesamten gefährdet werden. Es ist lediglich ein Hinweis, dass die Sicherheitsreserve S in Anspruch genommen wird. Die Sicherheit der Bremseinrichtung ist damit erhöht und ein Service kann initialisiert werden.

Eine weitere mögliche Fehlfunktion besteht darin, dass die Bremseinrichtung fehlerhaft nicht gelöst ist, i.e. der erste, zweite und dritte Reibkontakt im Fahrbetrieb geschlossen bleiben. Diese Fehlfunktion kann beispielsweise aus einem Defekt von Bremssteuereinheiten resultieren. Auch diese Fehlfunktion kann erkannt werden, wenn die Sensoreinrichtung erfasst, dass das Relativelement sich nicht in seiner Normallage befindet. Denn, wie vorstehend beschrieben, nimmt in einem solchen Fall das bewegliche Element das Relativelement in dem ersten Freiheitsgrad mit, wodurch dieses aus seiner Normal- in seine Bremslage verlagert wird. Ein Fahrbetrieb kann beispielsweise bei Auftreten einer derartigen Fehlfunktion stillgesetzt werden, bevor die entsprechenden Kontaktflächen überhitzt, verschlissen oder anderweitig Schaden genommen haben.

Besonders vorteilhaft ist hierbei, dass eine Funktionsfähigkeit der Bremseinrichtung und eine genügende Sicherheitsreserve bei jedem normalen Arbeitsspiel der Bremseinrichtung festgestellt werden kann. Dies erhöht die Betriebssicherheit der Bremseinrichtung deutlich.

In der Regel wird eine derartige Bremseinrichtung bei Neuanlagen, vorteilhafterweise direkt zusammen mit einer entsprechenden Antriebseinheit ausgeliefert. Ebenso kann eine entsprechende Bremseinrichtung auch in bestehenden Anlagen und Aufzugsanlagen als Ersatz einer bestehenden Bremseinrichtung verwendet werden. Dadurch kann besonders im Zusammenhang mit einer allfälligen Modernisierung einer Antriebsregelung eine erhöhte Sicherheit erreicht werden. Ein entsprechendes Modernisierungsset kann abgestimmt auf bekannte Aufzugsanlagen vorbereitet werden.

Weitere Aufgaben, Merkmale und Vorteile der vorliegenden Erfindung ergeben sich aus den Unteransprüchen und den nachfolgen beschriebenen Ausführungsbeispielen. Hierzu zeigt, teilweise schematisiert:

Fig. 1a       eine Bremseinrichtung nach einer ersten Ausführung der vorliegenden Erfindung im gelüfteten Zustand in einem Schnitt I-I in Fig. 1b;

Fig. 1b       die Bremseinrichtung nach Fig. 1a in einem seitlichen Schnitt;

Fig. 2a, 2b     die Bremseinrichtung nach Fig. 1 in einem normalen Haltezustand;

Fig. 3a, 3b     die Bremseinrichtung nach Fig. 1 bei einer Fehlfunktion mit Überwachungslogik;

Fig.4        eine Bremseinrichtung nach einer zweiten Ausführung der vorliegenden Erfindung im gelüfteten Zustand in einem seitlichen Schnitt;

Fig. 5        die Bremseinrichtung nach Fig. 4 in einem normalen Haltezustand;

Fig. 6        die Bremseinrichtung nach Fig. 4 bei einer Fehlfunktion; und

Fig. 7        eine Prinzipskizze einer dritten Ausführung der vorliegenden Erfindung.

Fig. 8a, 8b     die Bremseinrichtung nach Fig. 1 mit seriellen Bremsscheiben;

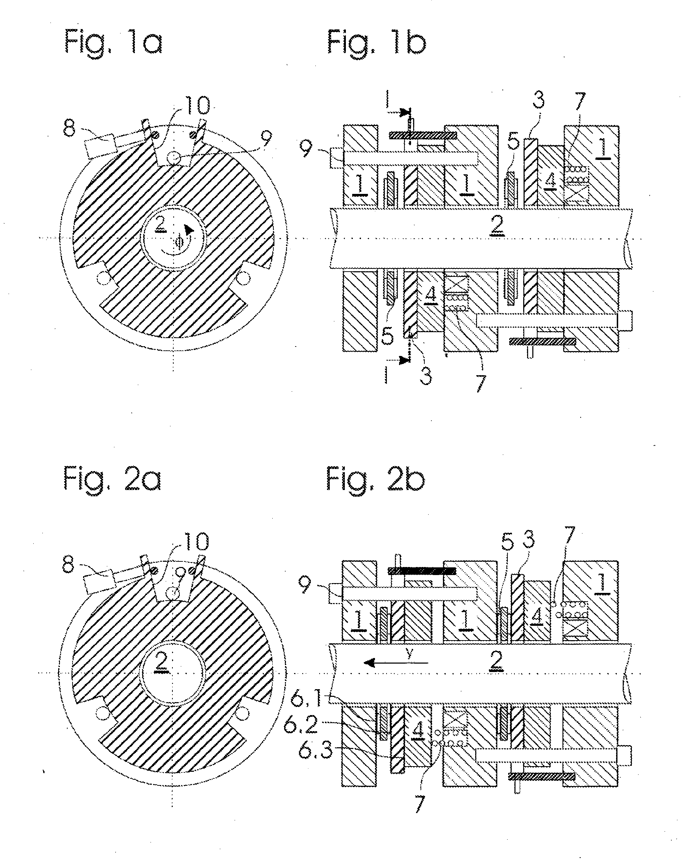

Fig. 1a, 1b zeigen eine Bremseinrichtung nach einer ersten Ausführung der vorliegenden Erfindung im gelüfteten, nicht bremsenden Zustand in einer seitlichen bzw. frontalen Ansicht. Die Bremseinrichtung umfasst ein statisches Element in Form eines mehrteiligen Gehäuses 1, welches inertial fest ist. In dem Gehäuse 1 ist ein bewegliches Element in Form einer Arbeitswelle 2 drehbar gelagert und weist gegenüber dem Gehäuse 1 den Drehfreiheitsgrad $\varphi$ auf. Auf der Welle sind zwei Bremselemente in Form von Bremsscheiben 5 axial verschieblich, jedoch drehfest, beispielsweise mittels einer Keilwellenverzahnung oder einer Passfeder (nicht dargestellt) angeordnet.

Zwei aktuierende Elemente in Form von Ankerscheiben 4 sind axial verschieblich, jedoch drehfest in dem Gehäuse 1 gelagert. Hierzu sind drei Bolzen 9 über den Umfang verteilt, die Durchgangs- bzw. Sackbohrungen im Gehäuse 1 und den Ankerscheiben 4 durchgreifen und auf denen die Ankerscheiben 4 gleiten.

Zwischen je einer Bremsscheibe 5 und einer Ankerscheibe 4 ist ein Relativelement in Form einer Scheibe 3 axial verschieblich gelagert. Die Scheiben 3 weisen je drei nutartige Aussparungen 10 mit einem Nutgrund auf, die die Bolzen 9 derart durchgreifen, dass sie auf dem jeweiligen Nutgrund aufliegen und so die Scheiben 3 drehbar lagern. Eine Drehung der Scheiben 3 wird durch die Flanken der Nuten 10 formschlüssig begrenzt, wobei die Scheiben um einen gewissen Winkel gedreht werden können, bevor die Bolzen 9 an der jeweiligen Flanken anliegen. Durch zwei Federn, die im Gehäuse 1 aufgenommen sind und sich an den hierzu verlängerten Flanken 10 (in Fig. 1a oben) innen abstützen, werden die Scheiben 3 in ihre in Fig. 1, 2 gezeigte Normallage A vorgespannt, die von einer Sensoreinrichtung 8 erfasst wird.

Fig. 1a, 1b zeigen die Bremseinrichtung im gelüfteten Zustand. Hierzu ziehen Elektromagnete die Ankerscheiben 4 gegen die Spannung einer Druckfeder 7 von den Bremsscheiben 5 weg, die dadurch frei mit der Arbeitswelle 2 drehen können. In diesem Zustand werden die Relativelemente 3 durch die oben erwähnten Federn in ihrer Normallage gehalten, was einen fehlerfreien Betrieb anzeigt.

Fig. 2a, 2b zeigen die Bremseinrichtung im geschlossenen Zustand. Hierzu werden die Elektromagnete nicht mehr mit Energie versorgt, so dass die Ankerscheiben 4 durch die Federn 7 mit einer Normalkraft FN in Richtung eines zweiten, axialen Freiheitsgrades y beaufschlagt werden. Mit derselben Normalkraft drücken die Ankerscheiben 4 die Relativelemente 3 gegen die Bremsscheiben 5, die hierdurch axial verschoben werden und mit derselben Normalkraft gegen das Gehäuse 1 gepresst werden.

Unter dieser Normalkraft FN schließen sich in einer ersten Kontaktfläche 6.1 zwischen Gehäuse 1 und Bremsscheibe 5, in einer zweiten Kontaktfläche 6.2 zwischen Bremsscheibe 5 und Relativelement 3 bzw. in einer dritten Kontaktfläche 6.3 zwischen Relativelement 3 und Ankerscheibe 4 ein erster, zweiter bzw. dritter Reibkontakt. Dabei herrscht aufgrund der sich drehenden Arbeitswelle 2 im ersten und zweiten Reibkontakt von Anfang an Gleitreibung, so dass sich eine erste bzw. zweite Reibkraft (bzw. ein Reibdrehmoment) $FRi^G = \mu i^G \times FN$ (i=1, 2) einstellt. Dabei bezeichnet $\mu i^G$ den Gleitreibwert im ersten bzw. zweiten Reibkontakt.

Im dritten Reibkontakt herrscht zunächst Haftreibung, da Relativelement 3 und Ankerscheibe 4 relativ zueinander ruhen. Die maximal wirkende dritte Reibkraft FR3max ist damit durch $FR3max^H = \mu 3^H \times FN$ gegeben, wobei $\mu 3^H$ den Haftreibwert im dritten Reibkontakt angibt. Dieser ist so gewählt, dass die maximale dritte Haftreibkraft größer als die zweite Gleitreibkraft ist:

$$\mu 3^H > \mu 2^G \qquad (5)$$

$$\Rightarrow \mu 3^H \times FN > \mu 2^G \times FN \qquad (5')$$

$$\Rightarrow FR3max^H > FR2^G \qquad (5'')$$

Durch die Haftkraftreserve ($FR3max^H - FR2^G$) wird das Relativelement 3 in seiner Normallage A gehalten, während die Bremsscheibe 5 an ihm gleitet. Stoppt die Arbeitswelle 2 schließlich (Fig. 2), so wechseln auch der erste und zweite Reibkontakt von Gleit- zu Haftreibung. Da die Haftreibwerte $\mu 1^H = \mu 2^H \gg \mu 3^H$ gewählt sind, ist nun die maximale zweite Reibkraft FR2max größer als die maximale dritte Reibkraft FR3max. Hierbei ist zu beachten, dass der Einfachheit halber jeweils nur von einem Reibwert $\mu i^H$, $\mu i^G$ gesprochen wird. In der Realität ist jeder dieser Reibwerte mit einem Streubereich bzw. Toleranz behaftet. Beispielsweise ist also die Definition $\mu 3^H > \mu 2^G$ so zu verstehen, dass der Wert von $\mu 3^H$, unabhängig von seiner Toleranzlage, grösser als der Wert von $\mu 2^G$, unabhängig von dessen Toleranzlage, ist. Bevorzugt werden die Toleranzgrenzen daher so gewählt, dass die erläuterten Beziehungen auch noch für Reibkräfte bzw. Reibwerte gelten, die an den Toleranzgrenzen liegen, um auch bei in der Praxis auftretenden Streuungen innerhalb der Toleranzen die erfindungsgemäße Funktionalität zu gewährleisten.

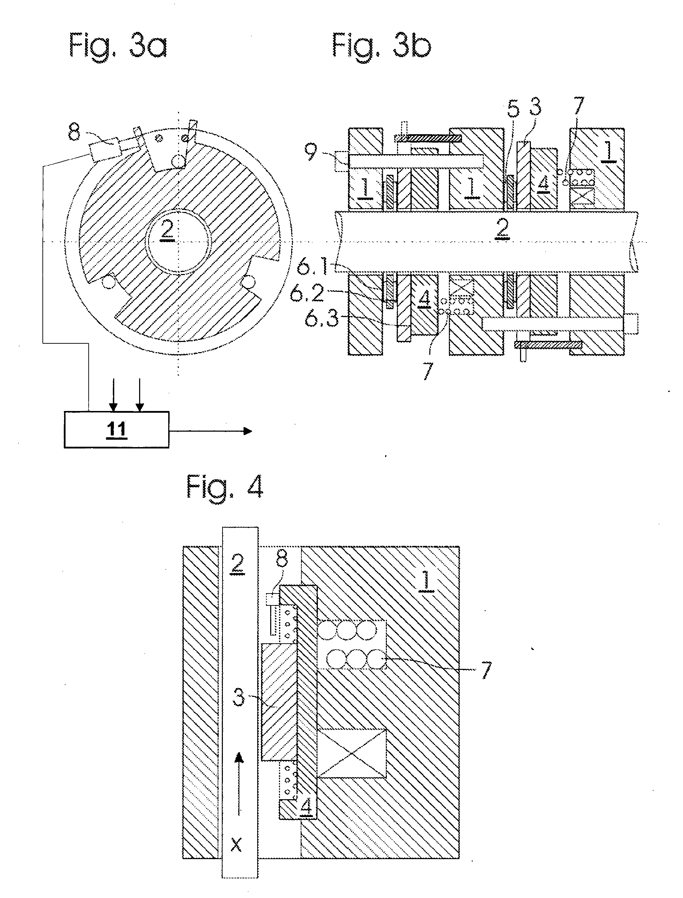

Eine mögliche Fehlfunktion der Bremseinrichtung besteht darin, dass sich die Bremseinrichtung fehlerhaft nicht löst, wenn die Arbeitswelle wieder in Betrieb genommen wird. In diesem Fall übt die Arbeitswelle 2 über die Bremsscheibe 5, ausgehend von der vorstehend mit Bezug auf Fig. 2 beschriebenen Halteposition, eine Kraft auf den noch geschlossenen ersten, zweiten und dritten Reibkontakt aus. Da die maximale dritte Reibkraft aufgrund der Wahl der Reibwerte $\mu 1^H = \mu 2^H \gg \mu 3^H$ am geringsten ist, wechselt zuerst der dritte Reibkontakt von Haft- zu Gleitreibung, das Relativelement 3 beginnt sich relativ zur Ankerscheibe 4 zu drehen. Dabei dreht sich das Relativelement in die in Fig. 3 gezeigte Bremslage B, was von der Sensoreinrichtung 8 erfasst wird. Diese gibt daraufhin eine Zustandsinformation an eine Überwachungslogik 11. Die Überwachungslogik 11 wertet das Signal der Sensoreinrichtung 8 unter Benutzung weiterer Signale, wie beispielsweise Bewegungs- oder Geschwindigkeitszustand des Fahrkörpers bzw. des beweglichen Elementes 2 und/oder eines Bremssignals, welches anzeigt ob die Bremse zu oder offen ist, aus und gibt eine allfällige Fehlerinformation an eine Aufzugsteuerung (nicht dargestellt) aus, die den Antrieb der Arbeitswelle 2 stoppt und so ein Durchglühen der Bremsscheiben 5 verhindert und eine entsprechende Servicemitteilung auslöst.

Eine weiter mögliche Fehlfunktion der Bremseinrichtung besteht darin, dass die von der Bremseinrichtung aufgebrachte Haltekraft nicht ausreicht. Wiederum ausgehend von der mit Bezug auf Fig. 2 beschriebenen Halteposition ist die in der Normallage A maximal von der Bremseinrichtung aufgebrachte Bremskraft FRmax aufgrund der Ausführung mit zwei Bremsscheiben

$$FRmax = 2 \times (\mu1^{H} + \mu3^{H}) \times FN \qquad (6)$$

Wie vorstehend ausgeführt, können dabei aufgrund des Drehfreiheitsgrades $\varphi$ in den Gleichungen an Stelle von translatorischen Kräften auch Drehmomente eingesetzt werden. Reichen nun die Reibkräfte nicht aus, beginnt sich die Arbeitswelle 2 zu drehen. Da die maximale dritte Reibkraft aufgrund der Wahl der Reibwerte $\mu1^{H} = \mu2^{H} \gg \mu3^{H}$ am geringsten ist, wechselt dabei der dritte Reibkontakt von Haft- zu Gleitreibung, während im zweiten Reibkontakt weiterhin Haftreibung vorliegt. Das Relativelement 3 beginnt sich relativ zur Ankerscheibe 4 zu drehen. Dabei dreht sich das Relativelement wiederum in die in Fig. 3 gezeigte Bremslage B, was von der Sensoreinrichtung 8 erfasst wird. Diese gibt daraufhin eine Fehlfunktionsmeldung wie vorgängig beschrieben beispielsweise über eine Überwachungslogik an eine Aufzugsteuerung (nicht dargestellt) aus.

In der Bremslage B (Fig. 3) verhindert der Formschluss zwischen Bolzen 9 und den Flanken der Aussparung 10 ein Weiterdrehen des Relativelementes 3, dieses wird dadurch in dem ersten Freiheitsgrad $\varphi$ gegenüber dem Gehäuse 1 fest. Damit überträgt nun das Relativelement 3 die größere zweite Haftreibkraft auf die Bremsscheibe 5, die gesamte Bremskraft erhöht sich mithin auf

$$FR = 2 \times (\mu1^{H} + \mu2^{H}) \times FN \qquad (6')$$

Da die Bremseinrichtung so ausgelegt ist, dass in Normalfall die im ersten und dritten Reibkontakt zur Verfügung gestellte Reibkraft gemäß Gleichung (6) zum Halten der Arbeitswelle 2 ausreicht, ist damit eine Sicherheitsreserve von $(\mu1^{H} + \mu2^{H})/(\mu1^{H} + \mu3^{H})$ gegeben.

Fig. 4 zeigt eine Bremseinrichtung nach einer zweiten Ausführung der vorliegenden Erfindung im gelüfteten Zustand in einem seitlichen Schnitt. Diese Bremseinrichtung ist für eine Aufzugsanlage vorgesehen, bei dem sich das Gehäuse 1, welches an einer Aufzugkabine (nicht dargestellt) befestigt sein kann, in einem ersten Freiheitsgrad x längs einer Bremsschiene 2 bewegt.

Bei gelüfteter Bremseinrichtung (Fig. 4) zieht ein Elektromagnet ein Ankerelement 4 gegen die Vorspannung einer Druckfeder 7 in einem zweiten Freiheitsgrad y in das Gehäuse 1, so dass das Gehäuse 1 längs der Bremsschiene reibungsfrei gleiten kann.

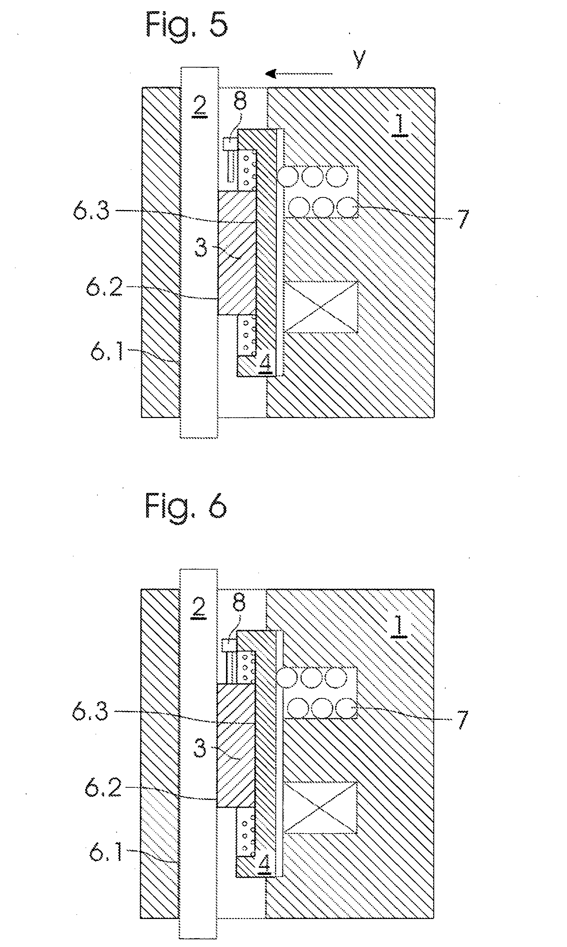

Zum Abbremsen der Aufzugkabine (Fig. 5) wird der Elektromagnet (oder andere geeignete Lüftantriebe) abgeschaltet, die Druckfeder 7 presst das Ankerelement 4 in dem zweiten Freiheitsgrad y mit einer Normalkraft FN gegen ein Relativelement 3, welches in dem Ankerelement 4 längs des ersten Freiheitsgrades x verschieblich angeordnet ist und durch beidseitige Druckfedern in einer Normallage A (Fig. 4, 5) gehalten wird. Hierdurch wird auch das Relativelement 3 mit der Normalkraft FN gegen die Bremsschiene 2 gepresst, die ihrerseits gegen das Gehäuse 1 gedrückt wird. Dabei werden in einer ersten Kontaktfläche 6.1, in der die Bremsschiene 2 gegen das Gehäuse 1 gepresst wird, in einer zweiten Kontaktfläche 6.2, in der das Relativelement 3 die Bremsschiene 2 berührt, und in einer dritten Kontaktfläche 6.3, in der Ankerelement 4 und Relativelement 3 miteinander in Kontakt sind, ein erster, zweiter bzw. dritter Reibkontakt geschlossen. Im ersten und zweiten Reibkontakt liegt dabei aufgrund der sich relativ zum Gehäuse 1 bewegenden Bremsschiene 2 Gleitreibung vor, im dritten Reibkontakt zwischen dem relativ zueinander ruhenden Relativ- und Ankerelement 3, 4 Haftreibung.

Wie im ersten Ausführungsbeispiel sind die Haftreibwerte $\mu1^{H} = \mu2^{H} \gg \mu3^{H}$ gewählt. Gleichwohl sind die Gleitreibwerte $\mu1^{G} = \mu2^{G}$ in der ersten und zweiten Kontaktfläche kleiner der Haftreibwert $\mu3^{H}$ in der dritten Kontaktfläche. Da alle Kontaktflächen mit derselben Normalkraft FN beaufschlagt sind, ist die Gleitreibkraft im ersten und zweiten Reibkontakt niedriger als die maximale Haftreibkraft im dritten Reibkontakt:

$$\mu1^{G} = \mu2^{G} < \mu3^{H} < \mu1^{H} = \mu2^{H} \qquad (7)$$

$$\Rightarrow FR1^{G} = FR2^{G} < FR3max^{H} \qquad (7')$$

Daher gleitet die Bremsschiene 2 im ersten und zweiten Reibkontakt, das Relativelement 3 bleibt in seiner durch die Druckfedern vorgespannten Normallage A (Fig. 5). Im Stillstand wechseln dann auch der erste und zweite Reibkontakt von Gleit- zu Haftreibung, die Gesamtreibkraft, mit der das Gehäuse 1 die Bremsschiene 2 hält, ist durch die Haftreibung im ersten und dritten Reibkontakt begrenzt:

$$FRmax = (\mu 1^H + \mu 3^H) \times FN \qquad (6'')$$

Wie beim ersten Ausführungsbeispiel führt eine blockierende Bremseinrichtung, die sich trotz Bewegung des Gehäuses 1 relativ zur Bremsschiene 2 nicht löst, ebenso wie eine zu geringe Gesamtreibkraft FRmax nach Gleichung (6") zu einem Mitnehmen des Relativelementes 3 durch die Bremsschiene 2 im ersten Freiheitsgrad x, bis dieses an einem oberen Anschlag im Ankerelement 4 gestoppt wird (nicht dargestellt). Dabei registriert ein Sensor 8 den Übergang des Relativelementes von der Normallage A (Fig. 5) in diese Bremslage B (Fig. 6) und gibt eine Fehlfunktionsmeldung aus. Sobald das Relativelement durch den (nicht dargestellten) Anschlag in dem ersten Freiheitsgrad x gegenüber dem Ankerelement 4 festliegt, wirkt in der zweiten Kontaktfläche 6.2 die zweite Reibkraft FR2 der Bewegung entgegen, die Gesamttreibkraft erhöht sich von FR = ($\mu 1 + \mu 3$) × FN auf FR = ($\mu 1 + \mu 2$) × FN.

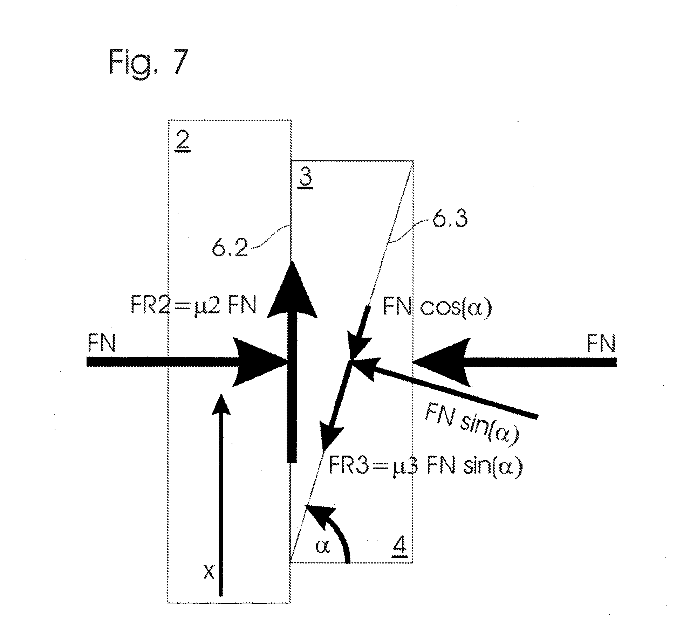

Im ersten und zweiten Ausführungsbeispiel wurde die maximale zweite und dritte Reibkraft jeweils durch entsprechende Wahl der Reibwerte $\mu 2$, $\mu 3$, insbesondere der Haftreibwerte $\mu 2^H$, $\mu 3^H$ realisiert. Alternativ oder zusätzlich können die unterschiedlichen maximalen Reibkräfte jedoch auch dadurch realisiert werden, dass die dritte Kontaktfläche 6.3 relativ zur Normalkraft geneigt ist. Hierzu zeigt Fig. 7 in einer Prinzipskizze die an einem Relativelement 3 angreifenden Kräfte bei Beaufschlagung mit der gemeinsamen Normalkraft FN. Das in Fig. 7 gezeigte Prinzip kann beispielsweise beim ersten oder zweiten Ausführungsbeispiel umgesetzt sein, wobei dann gleiche Bezugszeichen gleichen Elementen entsprechen, das aktuierende Element 4 in Fig. 7 also beispielsweise der Ankerscheibe 4 im ersten oder dem Ankerelement 4 im zweiten Ausführungsbeispiel entspricht.

Es sei zunächst angenommen, dass das gehaltene bewegliche Element 2 sich unter Einfluss äußerer Kräfte, beispielsweise der Last einer Aufzugkabine, im ersten Freiheitsgrad x in positiver Richtung (nach oben in Fig. 7) zu bewegen sucht. Dann stellt sich bei Beaufschlagung des aktuierenden Elementes 4 mit der Normalkraft FN in der zweiten Kontaktfläche 6.2 eine Reibkraft FR2 ein, die der Summe der übrigen am beweglichen Element 2 angreifenden Kräfte entgegengesetzt gleich groß ist, jedoch maximal FR2max = $\mu 2^H$ × FN werden kann.

Die in der dritten, um den Winkel ($\pi - \alpha$) gegen die Normalkraft FN geneigten Kontaktfläche 6.3 wirkende Normalkraft FN spaltet sich in zwei Komponenten auf, wobei die eine Komponente FN × $\sin(\alpha)$ senkrecht zur dritten Kontaktfläche 6.3 steht, die andere Komponente FN × $\cos(\alpha)$ tangential zur dritten Kontaktfläche 6.3 orientiert ist. Die in der dritten Kontaktfläche 6.3 maximal wirkenden dritte Reibkraft ergibt sich damit aus der einen Komponente zu FR3max = $\mu 3^H$ × $\sin(\alpha)$ × FN. Durch geeignete Wahl des Neigungswinkels $\alpha$ kann damit beispielsweise bei gleichem Haftreibwert eine niedrigere maximale dritte Reibkraft vorgegeben werden. Projeziert man diese Reibkraft noch in den ersten Freiheitsgrad x, so wirkt einer Bewegung des Relativelementes 3 relativ zum aktuierenden Element 4 in dem ersten Freiheitsgrad nur noch maximal eine Haftreibkraft von FR3max = $\mu 3^H$ × $\sin^2(\alpha)$ × FN entgegen.

Wie man weiter aus Fig. 7 erkennt, wirkt einer Bewegung des Relativelementes 3 relativ zum aktuierenden Element in dem ersten Freiheitsgrad x in positiver Richtung (nach oben in Fig. 7) zusätzlich eine Komponente FN × $\cos(\alpha)$ entgegen, die insofern die insgesamt wirksame maximale dritte Reibkraft erhöht. Bei einer Bewegung in negativer Richtung (nach unten in Fig. 7) vermindert diese Komponenten FN × $\cos(\alpha)$ hingegen die wirksame maximale dritte Reibkraft, so dass sich in beide Bewegungsrichtungen unterschiedliche maximale dritte Reibkräfte ergeben. Dies kann vorteilhaft genutzt werden, wenn beispielsweise die Aufzugkabine, die durch die Bremseinrichtung gehalten wird, nur teilbalanciert ist, i.e. das bewegliche Element 2 in einer Bewegungsrichtung stärker gehalten werden muss als in der anderen.

Im Weiteren ergibt sich bei einer Verschiebung des Relativelementes 3 relativ zum aktuierenden Element 4 zwangsläufig eine Veränderung eines Zustellweges entlang des Freiheitsgrades y. Diese Veränderung bewirkt eine Zu- oder Abnahme der Normalkraft FN entsprechend einer Kraftcharakteristik von Zustellaktoren wie beispielsweise der Druckfeder 7 (Fig. 4 bis 6). Damit kann eine Bremskraft entsprechend einer Bewegungs- oder Bremsrichtung beeinflusst werden.

Die Ausführungsbeispiele nehmen Bezug auf eine Abstimmung der Gleit- und Haftreibwerte der Reibflächen, um sowohl beim alleinigen Halten wie auch beim Abbremsen und nachfolgendem Halten eine Fehlfunktion sicher detektieren zu können. Dies wird erreicht, indem die Bedingung

$$\mu 2^G < \mu 3^H < \mu 2^H \qquad (7)$$

erfüllt wird. Dies ist nicht zwingend, da in vielen heutigen Anwendungsfällen eine Bremseinrichtung im Normalfall nur zum Halten, bspw. einer Aufzugskabine im Stillstand verwendet wird. Eine Verwendung der Bremseinrichtung zum Bremsen ist lediglich in einem Fehlerfalle erforderlich und stellt somit schon selbst eine Fehlersituation dar. Es ist in diesen Einzelfällen nicht erforderlich, dass das Relativelement 3 in seiner Normallage verbleibt. Es darf durchaus von seiner Normallage in die Bremslage verschoben werden, wodurch dann die entsprechend höhere Bremskraft

$$FR = FR1 + FR2 \qquad (1')$$

zur Anwendung gelangt. Dies kann erreicht werden, indem die Reibwerte $\mu 3^H$, $\mu 3^G$ der dritten Kontaktfläche deutlich kleiner als die Reibwerte $\mu 2^H$, $\mu 2^G$ der zweiten Kontaktfläche gewählt werden.

$$\mu 3^G < \mu 3^H << \mu 2^G < \mu 2^H \qquad (7')$$

Selbstverständlich sind Kombinationen der gezeigten Ausführungsformen möglich. So können beispielsweise mehrere zweite und dritte Kontaktflächen zu einer ersten Kontaktfläche kombiniert werden, wodurch die Sicherheitsreserve zusätzlich vergrössert wird.

In einer bevorzugten Ausführungsvariante ist die Bremseinrichtung in einen Antrieb der Aufzugsanlage ein- oder angebaut. Der Antrieb beinhaltet ein oder mehrere Treibscheiben welche in eine Antriebswelle integriert oder aufgebracht ist. Die Antriebswelle ist von einem Motor angetrieben und von der Bremseinrichtung im Stillstand gehalten bzw. bedarfsweise gebremst. Fallweise kann zwischen Motor und Antriebswelle eine Übersetzung angeordnet sein. Der Antrieb beinhaltet somit auch die Bremseinrichtung welche in der Regel auf zwei im Wesentlichen identische Einheiten aufgeteilt ist. Jede der Einheiten ist in ihrer Bremslage (B) für sich genommen in der Lage den bewegten Fahrkörper an- und festzuhalten. Gemäss einer ersten Ausführungsart des Antriebes sind die beiden Einheiten zu einer einzigen Bremseinrichtung zusammengebaut und an einem Ende der Antriebswelle angeordnet. Die Antriebswelle entspricht in dieser Ausführungsart dem beweglichen Element 2. Diese Anordnungsart ist kostengünstig, da die Bremseinrichtung beispielsweise als komplette Einheit vormontiert werden kann.

Gemäss einer alternativen Ausführungsart des Antriebes sind die beiden Einheiten der Bremseinrichtung an den beiden Enden der Antriebswelle angebaut. Das bedeutet, dass die Treibscheibe zwischen den Einheiten der Bremseinrichtung angeordnet ist. Beim Abbremsen wird somit ein Brems- oder Haltemoment von der Treibscheibe weg auf die beiden Einheiten verteilt. Somit ergeben sich deutlich bessere Kraftverteilungen in der Antriebswelle und ein Versagensrisiko der Bremseinrichtung wegen einem Bruch der Antriebswelle ist reduziert.

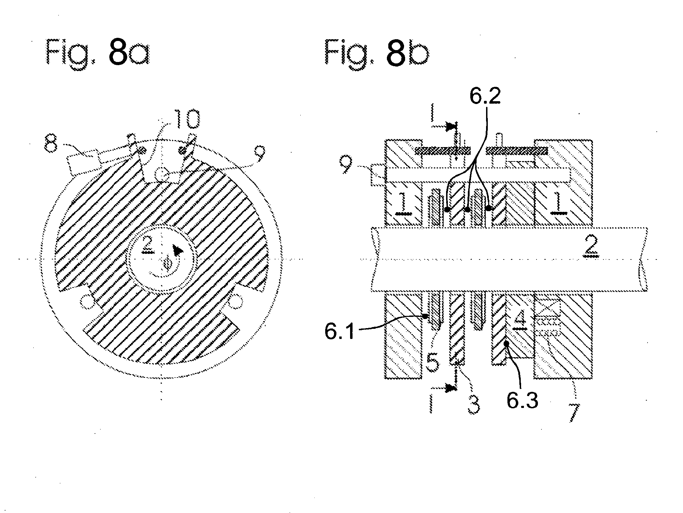

Im Idealfall ist die Bremswirkung zwischen Normallage und Bremslage verdoppelt. Dies ist dann der Fall, wenn der Reibwert $\mu 3$ in der dritten Kontaktfläche annähernd Null ist. Unter Verwendung von Bremseinrichtungen mit mehreren hintereinander geschalteten Bremseinrichtungen wie beispielsweise in den Fig. 8a und 8b dargestellt, kann die Bremskraftverstärkung zwischen Normal- und Bremslage beeinflusst werden. Werden beispielsweise mehrere Bremsscheiben 5 und relative Elemente 3 oder statische Elemente 1 hintereinander angeordnet kann, durch die Ausführung des Freilaufweges der einzelnen relativ- bzw. statischen Elemente, eine gewünschte Bremsverstärkungen erreicht werden. Im Beispiel gemäss Fig. 8a und 8b sind drei zweite Kontaktflächen 6.2, welche erst in der Bremslage zur Wirkung gelangen zu einer ersten Kontaktfläche 6.1 angeordnet. Unter Vernachlässigung der Reibkraft der dritten Kontaktfläche 6.3 ergibt sich somit eine Vervierfachung der Bremskraft bei Erreichen der Bremslage. Ein Fachmann kann beliebige Kombinationen bestimmen.

Ein Hauptvorteil der Erfindung ergibt sich durch die Verwendung einer zweckmässigen Überwachungslogik, welche ein korrektes Funktionieren der Bremseinrichtung überwacht.


**Patentansprüche**

1.  Bremseinrichtung, zum Halten eines Fahrkörpers im Stillstand und zum Verzögern, des Fahrkörpers im Bedarfsfall mit

    - einem statischen Element (1);
    - einem beweglichen Element (2), welches relativ zu dem statischen Element in einem ersten Freiheitsgrad ($\varphi$; x) entsprechend einer Fahrrichtung des Fahrkörpers beweglich ist, wobei zwischen dem statischen Element (1) und dem beweglichen Element (2) durch eine Normalkraft (FN), die in einem zweiten Freiheitsgrad (y) wirkt, ein erster Reibkontakt in einer ersten Kontaktfläche (6.1) geschlossen werden kann, wobei in dem ersten Reibkontakt eine erste Reibkraft (FR1) einer Bewegung des beweglichen Elementes relativ zu dem statischen

EP 1 923 346 B1

Element (1) entgegenwirkt;
- einem Relativelement (3), welches in dem zweiten Freiheitsgrad (y) in Richtung des beweglichen Elements (2) zustellbar ist wobei zwischen dem beweglichen Element (2) und dem Relativelement (3) durch die Normalkraft (FN) ein zweiter Reibkontakt in einer zweiten Kontaktfläche (6.2) geschlossen ist, wobei in dem zweiten Reibkontakt eine zweite Reibkraft (FR2) einer Bewegung des beweglichen Elements relativ zu dem Relativelement entgegenwirkt; wobei

das Relativelement (3) in dem ersten Freiheitsgrad ($\varphi$; x) gegenüber dem statischen Element (1) zwischen einer Normallage (A) und einer Bremslage (B) beweglich ist,
das Relativelement (3) in die Normallage (A) vorgespannt und eine Bewegung über die
Bremslage (B) hinaus gesperrt ist und
die Bremseinrichtung weiter eine Sensoreinrichtung (8) zur Erfassung der Normal- und/oder Bremslage (A, B) des Relativelements (3) umfasst.

2. Bremseinrichtung nach Anspruch 1 weiter enthaltend

- ein aktuierendes Element (4), welches in dem ersten Freiheitsgrad ($\varphi$; x) gegenüber dem statischen Element (1) fest ist und welches in dem zweiten Freiheitsgrad (y) in Richtung des beweglichen Elements (2) zustellbar ist, wobei zwischen dem aktuierenden Element (4) und dem Relativelement (3), in zugestelltem Zustand, durch die Normalkraft (FN) ein dritter Reibkontakt in einer dritten Kontaktfläche (6.3) geschlossen ist, in dem eine dritte Reibkraft (FR3) einer Bewegung des Relativelements (3) relativ zu dem aktuierenden Element (4) entgegenwirkt;

wobei die zweite und dritte Kontaktfläche (6.2, 6.3) so ausgebildet sind, dass eine maximale zweite Reibkraft (FR2max) der zweiten Kontaktfläche (6.2) größer als eine maximale dritte Reibkraft (FR3max) der dritten Kontaktfläche (6.3) ist.

3. Bremseinrichtung nach einem der vorhergehenden Ansprüche, **dadurch gekennzeichnet, dass** die Bremseinrichtung weiter eine Überwachungslogik (11) beinhaltet, welche Signale der Sensoreinrichtung (8), ein Steuersignal der Bremseinrichtung und einen Bewegungszustand des beweglichen Elementes (2) auswertet.

4. Bremseinrichtung nach einem der vorhergehenden Ansprüche, **dadurch gekennzeichnet, dass** die zweite Kontaktfläche (6.2) einen höheren Reibwert ($\mu$), insbesondere einen höheren Haftreibwert ($\mu^H$) aufweist als die dritte Kontaktfläche (6.3).

5. Bremseinrichtung nach einem der vorhergehenden Ansprüche, **dadurch gekennzeichnet, dass** die dritte Kontaktfläche (6.3) relativ zur Normalkraft (FN) geneigt ist.

6. Bremseinrichtung nach einem der vorhergehenden Ansprüche, **dadurch gekennzeichnet, dass** das Relativelement (3) und/oder das aktuierende Element (4) durch die Normalkraft (FN) in dem zweiten Freiheitsgrad (y) so bewegt werden, dass der erste, zweite und dritte Reibkontakt geschlossen wird.

7. Bremseinrichtung nach einem der Ansprüche 2 bis 6, **dadurch gekennzeichnet, dass** sie weiter ein Bremselement (5) umfasst, welches in dem ersten Freiheitsgrad ($\varphi$) relativ zu dem beweglichen Element (2) fest ist und durch die Normalkraft (FN) in dem zweiten Freiheitsgrad (y) so bewegt wird, dass der erste, zweite und dritte Reibkontakt geschlossen wird.

8. Bremseinrichtung nach einem der Ansprüche 2 bis 6, **dadurch gekennzeichnet, dass** das bewegliche Element (2) und das statische Element (1) durch die Nonnalkraft (FN) in dem zweiten Freiheitsgrad (y) relativ zueinander so bewegt, insbesondere verformt, werden, dass der erste, zweite und dritte Reibkontakt geschlossen wird.

9. Bremseinrichtung nach einem der vorhergehenden Ansprüche, **dadurch gekennzeichnet, dass** das aktuierende Element (4), insbesondere durch ein elastisches Mittel (7), mit der Normalkraft (FN) vorgespannt ist und elektromagnetisch und/oder hydraulisch wahlweise gelüftet wird.

10. Bremseinrichtung nach einem der vorhergehenden Ansprüche, **dadurch gekennzeichnet, dass** sie eine Mehrzahl von Relativelementen (3) sowie diesen jeweils zugeordneten aktuierenden Elementen (4) umfasst, wobei zwischen jedem Relativelement (3) und dem beweglichen Element (2) durch eine Normalkraft (FN) ein zweiter Reibkontakt in einer zweiten Kontaktfläche (6.2) und zwischen jedem Relativelement (3) und dem zugeordneten aktuierenden Elementen (4) durch die Normalkraft (FN) ein dritter Reibkontakt in einer dritten Kontaktfläche (6.3) geschlossen wird.

11. Aufzuganlage mit einer Bremseinrichtung nach einem der vorhergehenden Ansprüche, **dadurch gekennzeichnet, dass** eines von dem statischen Element (1) und dem beweglichen Element (2) inertialfest angeordnet und das andere von dem statischen Element (1) und dem beweglichen Element (2) so mit einem Fahrkörper, im Besonderen mit einer Kabine der Aufzuganlage gekoppelt ist, dass es diese halten und/oder abbremsen kann.

12. Aufzugsanlage nach Anspruch 11, **dadurch gekennzeichnet, dass** die Normalkraft (FN) derart bemessen ist, dass eine in der Normallage (A) der Bremseinrichtung bewirkte Haftkraft genügt um den Fahrkörper mit seiner zugelassenen Last sicher zu halten.

13. Aufzugsanlage nach Anspruch 11 oder 12, **dadurch gekennzeichnet, dass** die Normalkraft (FN) derart bemessen ist, dass eine in der Bremslage (B) der Bremseinrichtung bewirkte Gleitkraft genügt um den Fahrkörper mit seiner zugelassenen Last sicher abzubremsen.

14. Aufzugsanlage nach einem der Ansprüche 10 bis 13, **dadurch gekennzeichnet, dass** die in der Bremslage (B) der Bremseinrichtung bewirkte Gleitkraft um mindestens 50% grösser als die in der Normallage (A) der Bremseinrichtung bewirkte Haftkraft ist.

15. Verfahren zum Erfassen einer Funktion einer Bremseinrichtung nach einem der vorhergehenden Ansprüche 1 bis 10, **dadurch gekennzeichnet, dass** die Funktion mittels der Sensoreinrichtung (8) überwacht wird, welche Sensoreinrichtung (8) die Lage eines Relativelementes (3) erfasst.

16. Verfahren nach Anspruch 15, **dadurch gekennzeichnet, dass** eine die Funktion mittels einer Überwachungslogik (11) überwacht wird, welche Signale der Sensoreinrichtung (8), ein Steuersignal der Bremseinrichtung und einen Bewegungszustand des beweglichen Elementes (2) auswertet.

17. Verfahren nach Anspruch 15 oder 16, **dadurch gekennzeichnet, dass** als Funktion eine Fehlfunktion erfasst wird, wenn die Überwachungslogik erfasst,

   - dass das Steuersignal der Bremseinrichtung "zu" anzeigt, der Bewegungszustand des beweglichen Elementes (2) "0" anzeigt und das Relativelement (3) sich in seiner Bremslage (B) befindet; oder
   - dass das Steuersignal der Bremseinrichtung "offen" anzeigt, der Bewegungszustand des beweglichen Elementes (2) "≠0" anzeigt und das Relativelement (3) sich in seiner Bremslage (B) befindet,

18. Verfahren nach Anspruch 15 oder 16, **dadurch gekennzeichnet, dass** als Funktion eine Normal-Funktion erfasst wird, wenn die Überwachungslogik erfasst,

   - dass das Steuersignal der Bremseinrichtung "zu" anzeigt, der Bewegungszustand des beweglichen Elementes (2) "0" anzeigt und das Relativelement (3) sich in seiner Normallage (A) befindet; oder
   - dass das Steuersignal der Bremseinrichtung "zu" anzeigt, der Bewegungszustand des beweglichen Elementes (2) "#0" anzeigt und das Relativelement (3) sich in seiner Bremslage (B) befindet; oder
   - dass das Steuersignal der Bremseinrichtung "offen" anzeigt, der Bewegungszustand des beweglichen Elementes (2) "≠0" anzeigt und das Relativelement (3) sich in seiner Normallage (A) befindet.

19. Modernisierungsset mit einer Bremseinrichtung nach einem der Ansprüche 1 bis 10 zur Verwendung in einer bestehenden Aufzugsanlage.

**Claims**

1. Braking device, for holding a travelling body at a standstill and for decelerating the travelling body in case of need, comprising

   - a static element (1);
   - a movable element (2), which is movable in relation to the static element in a first degree of freedom ($\varphi$; x) corresponding to a direction of travel of the travelling body, wherein between the static element (1) and the movable element (2) a first frictional contact in a first contact area (6.1) can be closed by a normal force (FN), which acts in a second degree of freedom (y), wherein in the first frictional contact a first frictional force (FR1) counteracts a movement of the movable element in relation to the static element (1);
- a relative element (3), which is adjustable in the second degree of freedom (y) in the direction of the movable element (2), wherein between the movable element (2) and the relative element (3) a second frictional contact in a second contact area (6.2) is closed by the normal force (FN), wherein in the second frictional contact a second frictional force (FR2) counteracts a movement of the movable element in relation to the relative element; wherein

the relative element (3) is movable in the first degree of freedom ($\varphi$; x) with respect to the static element (1) between a normal position (A) and a braking position (B),
the relative element (3) is prestressed into the normal position (A) and a movement beyond the braking position (B) is inhibited and
the braking device also comprises a sensor device (8) for sensing the normal and/or braking position (A, B) of the relative element (3).

2. Braking device according to Claim 1, also including

- an actuating element (4), which is fixed in the first degree of freedom ($\varphi$; x) with respect to the static element (1) and which is adjustable in the second degree of freedom (y) in the direction of the movable element (2), wherein between the actuating element (4) and the relative element (3), in the adjusted state, a third frictional contact in a third contact area (6.3) is closed by the normal force (FN), wherein a third frictional force (FR3) counteracts a movement of the relative element (3) in relation to the actuating element (4);

wherein the second and third contact areas (6.2, 6.3) are formed such that a maximum second frictional force (FR2max) of the second contact area (6.2) is greater than a maximum third frictional force (FR3max) of the third contact area (6.3).

3. Braking device according to one of the preceding claims, **characterized in that** the braking device also comprises a monitoring logic (11), which evaluates signals of the sensor device (8), a control signal of the braking device and a state of movement of the movable element (2).

4. Braking device according to one of the preceding claims, **characterized in that** the second contact area (6.2) has a higher coefficient of friction ($\mu$), in particular a higher coefficient of static friction ($\mu^H$), than the third contact area (6.3).

5. Braking device according to one of the preceding claims, **characterized in that** the third contact area (6.3) is inclined in relation to the normal force (FN).

6. Braking device according to one of the preceding claims, **characterized in that** the relative element (3) and/or the actuating element (4) are moved by the normal force (FN) in the second degree of freedom (y) such that the first, second and third frictional contacts are closed.

7. Braking device according to one of Claims 2 to 6, **characterized in that** it also comprises a braking element (5), which is fixed in the first degree of freedom ($\varphi$; x) in relation to the movable element (2) and is moved by the normal force (FN) in the second degree of freedom (y) such that the first, second and third frictional contacts are closed.

8. Braking device according to one of Claims 2 to 6, **characterized in that** the movable element (2) and the static element (1) are moved, in particular deformed, in relation to one another by the normal force (FN) in the second degree of freedom (y) such that the first, second and third frictional contacts are closed.

9. Braking device according to one of the preceding claims, **characterized in that** the actuating element (4) is prestressed with the normal force (FN), in particular by an elastic means (7), and is optionally released electromagnetically and/or hydraulically.

10. Braking device according to one of the preceding claims, **characterized in that** it comprises a plurality of relative elements (3) and actuating elements (4) respectively assigned to said relative elements, wherein between each relative element (3) and the movable element (2) a second frictional contact in a second contact area (6.2) is closed by a normal force (FN) and between each relative element (3) and the assigned actuating element (4) a third frictional contact in a third contact area (6.3) is closed by the normal force (FN).

11. Lift facility with a braking device according to one of the preceding claims, **characterized in that** one element, either the static element (1) or the movable element (2), is arranged inertially fixed and the other element, either the static element (1) or the movable element (2), is coupled to a travelling body, in particular to a car of the lift facility, such that it can hold and/or brake it.

12. Lift facility according to Claim 11, **characterized in that** the normal force (FN) is set such that an adhesive force brought about in the normal position (A) of the braking device is sufficient to securely hold the travelling body with its authorized load.

13. Lift facility according to Claim 11 or 12, **characterized in that** the normal force (FN) is set such that a sliding force brought about in the braking position (B) of the braking device is sufficient to securely brake the travelling body with its authorized load.

14. Lift facility according to one of Claims 10 to 13, **characterized in that** the sliding force brought about in the braking position (B) of the braking device is greater by at least 50% than the adhesive force brought about in the normal position (A) of the braking device.

15. Method for sensing a function of a braking device according to one of the preceding Claims 1 to 10, **characterized in that** the function is monitored by means of the sensor device (8), which sensor device (8) senses the position of a relative element (3).

16. Method according to Claim 15, **characterized in that** a function is monitored by means of a monitoring logic (11), which evaluates signals of the sensor device (8), a control signal of the braking device and a state of movement of the movable element (2).

17. Method according to Claim 15 or 16, **characterized in that** a malfunction is sensed as the function if the monitoring logic senses

   - that the control signal of the braking device indicates "closed", the state of movement of the movable element (2) indicates "0" and the relative element (3) is in its braking position (B); or
   - that the control signal of the braking device indicates "open", the state of movement of the movable element (2) indicates "≠0" and the relative element (3) is in its braking position (B).

18. Method according to Claim 15 or 16, **characterized in that** a normal function is sensed as the function if the monitoring logic senses

   - that the control signal of the braking device indicates "closed", the state of movement of the movable element (2) indicates "0" and the relative element (3) is in its normal position (A); or
   - that the control signal of the braking device indicates "closed", the state of movement of the movable element (2) indicates "≠0" and the relative element (3) is in its braking position (B); or
   - that the control signal of the braking device indicates "open", the state of movement of the movable element (2) indicates "≠0" and the relative element (3) is in its normal position (A).

19. Modernisation set with a braking device according to one of Claims 1 to 10 for use in an existing lift facility.

**Revendications**

1. Dispositif de freinage destiné à maintenir un véhicule immobile et à ralentir le véhicule en cas de nécessité, comportant :

   - un élément statique (1) ;
   - un élément mobile (2) qui est mobile par rapport à l'élément statique suivant un premier degré de liberté ($\varphi$; x) correspondant à une direction de déplacement du véhicule, dans lequel, entre l'élément statique (1) et l'élément mobile (2), un premier contact de frottement dans une première surface de contact (6.1) peut être fermé par une force normale (FN) qui agit suivant un deuxième degré de liberté (y), dans lequel, dans le premier contact de frottement, une première force de frottement (FR1) agit à l'encontre d'un mouvement de l'élément mobile par rapport à l'élément statique (1),
- un élément relatif (3) qui peut être approché en direction de l'élément mobile (2) suivant le deuxième degré de liberté (y), dans lequel, entre l'élément mobile (2) et l'élément relatif (3), un deuxième contact de frottement dans une deuxième surface de contact (6.2) est fermé par la force normale (FN), dans lequel, dans le deuxième contact de frottement, une deuxième force de frottement (FR2) agit à l'encontre d'un mouvement de l'élément mobile, par rapport à l'élément relatif ; dans lequel

l'élément relatif (3) est mobile suivant le premier degré de liberté ($\varphi$ ; x) par rapport à l'élément statique (1), entre une position normale (A) et une position de freinage (B), l'élément relatif (3) est précontraint à la position normale (A) et un mouvement au-delà de la position de freinage (B) est bloqué, et
le dispositif de freinage comprend par ailleurs un dispositif de détection (8) destiné à détecter les positions normale et/ou de freinage (A, B) de l'élément relatif (3).

2. Dispositif de freinage selon la revendication 1, contenant par ailleurs :

- un élément d'actionnement (4) qui est fixe suivant le premier degré de liberté ($\varphi$ ; x), par rapport à l'élément statique (1), et qui peut être approché en direction de l'élément mobile (2) suivant le deuxième degré de liberté (y), dans lequel, entre l'élément d'actionnement (4) et l'élément relatif (3), à l'état approché, un troisième contact de frottement dans une troisième surface de contact (6.3) est fermé par la force normale (FN), une troisième force de frottement (FR3) agissant à l'encontre d'un mouvement de l'élément relatif (3) par rapport à l'élément d'actionnement (4) ;
- dans lequel les deuxième et troisième surfaces de contact (6.2, 6.3) sont conçues pour qu'une deuxième force de frottement maximale (FR2max) de la deuxième surface de contact (6.2) soit supérieure à une troisième force de frottement maximale (FR3max) de la troisième surface de contact (6.3).

3. Dispositif de freinage selon l'une quelconque des revendications précédentes, **caractérisé en ce que** le dispositif de freinage contient par ailleurs un système logique de surveillance (11) qui analyse des signaux du dispositif de détection (8), un signal de commande du dispositif de freinage et un état de mouvement de l'élément mobile (2).

4. Dispositif de freinage selon l'une quelconque des revendications précédentes, **caractérisé en ce que** la deuxième surface de contact (6.2) du dispositif de freinage présente un coefficient de frottement ($\mu$), en particulier un coefficient de frottement par adhérence ($\mu^H$), supérieur à celui de la troisième surface de contact (6.3).

5. Dispositif de freinage selon l'une quelconque des revendications précédentes, **caractérisé en ce que** la troisième surface de contact (6.3) est inclinée par rapport à la force normale (FN).

6. Dispositif de freinage selon l'une quelconque des revendications précédentes, **caractérisé en ce que** l'élément relatif (3) et/ou l'élément d'actionnement (4) sont déplacés par la force normale (FN) suivant le deuxième degré de liberté (y) de telle sorte que les premier, deuxième et troisième contacts de frottement se ferment.

7. Dispositif de freinage selon l'une quelconque des revendications 2 à 6, **caractérisé en ce qu'**il comprend par ailleurs un élément de freinage (5) qui est fixe suivant le premier degré de liberté ($\varphi$ ; x) par rapport à l'élément mobile (2) et qui est déplacé suivant le deuxième degré de liberté (y) par la force normale (FN) de telle sorte que les premier, deuxième et troisième contacts de frottement se ferment.

8. Dispositif de freinage selon l'une quelconque des revendications 2 à 6, **caractérisé en ce que** l'élément mobile (2) et l'élément statique (1) sont déplacés, en particulier déformés, l'un par rapport à l'autre suivant le deuxième degré de liberté (y) par la force normale (FN) de telle sorte que les premier, deuxième et troisième contacts de frottement se ferment.

9. Dispositif de freinage selon l'une quelconque des revendications précédentes, **caractérisé en ce que** l'élément d'actionnement (4) est précontraint par la force normale (FN), en particulier à l'aide d'un moyen élastique (7), et est desserré sélectivement de manière électromagnétique et/ou hydraulique.

10. Dispositif de freinage selon l'une quelconque des revendications précédentes, **caractérisé en ce qu'**il comprend une pluralité d'éléments relatifs (3) et des éléments d'actionnement (4) respectivement associés à ceux-ci, dans lequel un deuxième contact de frottement dans une deuxième surface de contact (6.2) se ferme du fait d'une force normale (FN) entre chaque élément relatif (3) et l'élément mobile (2), et un troisième contact de frottement dans une troisième surface de contact (6.3) se ferme du fait de la force normale (FN) entre chaque élément relatif (3) et l'élément d'actionnement (4) associé.

**11.** Installation d'ascenseur comportant un dispositif de freinage selon l'une quelconque des revendications précédentes, **caractérisée en ce que** l'un de l'élément statique (1) et de l'élément mobile (2) est disposé de manière fixe par inertie et **en ce que** l'autre de l'élément statique (1) et de l'élément mobile (2) est accouplé à un véhicule, en particulier à une cabine de l'installation d'ascenseur, de manière à pouvoir arrêter et/ou freiner ladite cabine.

**12.** Installation d'ascenseur selon la revendication 11, **caractérisée en ce que** la force normale (FN) est mesurée de manière à ce qu'une force d'arrêt provoquée à la position normale (A) du dispositif de freinage soit suffisante pour arrêter de manière sûre le véhicule avec sa charge autorisée.

**13.** Installation d'ascenseur selon la revendication 11 ou 12, **caractérisée en ce que** la force normale (FN) est mesurée pour qu'une force de glissement provoquée à la position de freinage (B) du dispositif de freinage soit suffisante pour freiner de manière sûre le véhicule avec sa charge autorisée.

**14.** Installation d'ascenseur comportant un dispositif de freinage selon l'une quelconque des revendications 10 à 13, **caractérisée en ce que** la force de glissement provoquée à la position de freinage (B) du dispositif de freinage est supérieure d'au moins 50% à la force d'adhérence provoquée à la position normale (A) du dispositif de freinage.

**15.** Procédé de détection d'une fonction d'un dispositif de freinage selon l'une quelconque des revendications 1 à 10 précédentes, **caractérisé en ce que** la fonction est surveillée au moyen du dispositif de détection (8), lequel dispositif de détection (8) détecte la position d'un élément relatif (3).

**16.** Procédé selon la revendication 15, **caractérisé en ce qu'**une fonction est surveillée au moyen d'un système logique de surveillance (11) qui analyse des signaux du dispositif de détection (8), un signal de commande du dispositif de freinage et un état de mouvement de l'élément mobile (2).

**17.** Procédé selon la revendication 15 ou 16, **caractérisé en ce qu'**une fonction de dysfonctionnement est détectée en tant que fonction lorsque le système logique de surveillance détecte

- que le signal de commande du dispositif de freinage affiche "fermé", que l'état de mouvement de l'élément mobile (2) affiche "0" et que l'élément relatif (3) se trouve à sa position de freinage (B) ; ou
- que le signal de commande du dispositif de freinage affiche "ouvert", que l'état de mouvement de l'élément mobile (2) affiche "≠0" et que l'élément relatif (3) se trouve à sa position de freinage (B).

**18.** Procédé selon la revendication 15 ou 16, **caractérisé en ce qu'**une fonction normale est détectée en tant que fonction lorsque le système logique de surveillance détecte

- que le signal de commande du dispositif de freinage affiche "fermé", que l'état de mouvement de l'élément mobile (2) affiche "0" et que l'élément relatif (3) se trouve à sa position normale (A) ; ou
- que le signal de commande du dispositif de freinage affiche "fermé", que l'état de mouvement de l'élément mobile (2) affiche "≠0" et que l'élément relatif (3) se trouve à sa position de freinage (B) ; ou
- que le signal de commande du dispositif de freinage affiche "ouvert", que l'état de mouvement de l'élément mobile (2) affiche "≠0" et que l'élément relatif (3) se trouve à sa position normale (A).

**19.** Ensemble de modernisation comportant un dispositif de freinage selon l'une quelconque des revendications 1 à 10 pour utilisation dans une installation d'ascenseur existante.

# Fig. 1a

# Fig. 1b

# Fig. 2a

# Fig. 2b

## Fig. 3a

## Fig. 3b

## Fig. 4

## Fig. 5

## Fig. 6

## Fig. 7

## Fig. 8a   Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19737485 C1
- EP 1655506 A
- DE 4106595 A1